(19) Europäisches Patentamt
European Patent Office
Office européen des brevets

(11) EP 0 981 569 B1

# (12) EUROPÄISCHE PATENTSCHRIFT

(45) Veröffentlichungstag und Bekanntmachung des Hinweises auf die Patenterteilung:
**09.04.2003 Patentblatt 2003/15**

(21) Anmeldenummer: **98924285.4**

(22) Anmeldetag: **06.05.1998**

(51) Int Cl.[7]: **C08G 65/10**

(86) Internationale Anmeldenummer:
**PCT/EP98/02674**

(87) Internationale Veröffentlichungsnummer:
**WO 98/051729 (19.11.1998 Gazette 1998/46)**

## (54) VERFAHREN ZUR POLYMERISATION CYCLISCHER ETHER

METHOD FOR POLYMERIZING CYCLIC ETHER

PROCEDE POUR LA POLYMERISATION D'ETHERS CYCLIQUES

(84) Benannte Vertragsstaaten:
**AT BE CH DE ES FR GB IE IT LI LU NL SE**

(30) Priorität: **12.05.1997 DE 19719875**

(43) Veröffentlichungstag der Anmeldung:
**01.03.2000 Patentblatt 2000/09**

(73) Patentinhaber: **BASF AKTIENGESELLSCHAFT**
**67056 Ludwigshafen (DE)**

(72) Erfinder:
- **ELLER, Karsten**
  **D-67061 Ludwigshafen (DE)**
- **STEIN, Frank**
  **D-67098 Bad Dürkheim (DE)**
- **SIGWART, Christoph**
  **D-69198 Schriesheim (DE)**
- **BECKER, Rainer**
  **D-67098 Bad Dürkheim (DE)**
- **PLITZKO, Klaus-Dieter**
  **D-67117 Limburgerhof (DE)**
- **FISCHER, Rolf**
  **D-69121 Heidelberg (DE)**
- **MÜLLER, Ulrich**
  **D-67435 Neustadt (DE)**

(74) Vertreter: **Isenbruck, Günter et al**
**Isenbruck, Bösl, Hörschler, Wichmann, Huhn, Patentanwälte**
**Theodor-Heuss-Anlage 12**
**68165 Mannheim (DE)**

(56) Entgegenhaltungen:
**EP-A- 0 083 970**
**EP-A- 0 250 168**
**DE-A- 4 433 606**
**DE-A- 19 527 532**
**US-A- 4 329 445**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Polymerisation cyclischer Ether an einem Heterogenkatalysator, wobei der Heterogenkatalysator einen oder mehrere Pillared Interlayered Clays (PILCs) enthält.

Polytetrahydrofuran (PTHF), auch Polyoxybutylenglykol genannt, dient als Zwischenprodukt zur Herstellung von Polyurethan-, Polyester- und Polyamid-Elastomeren, zu deren Herstellung es als Diolkomponente eingesetzt wird. Der Einbau von PTHF in diese Polymere bewirkt, daß diese weich und flexibel werden, weshalb PTHF auch als Weichsegment-Komponente für diese Polymere bezeichnet wird. Polytetrahydrofuranmonoester von Monocarbonsäuren finden beispielsweise als Weichmacher (US-A 4 482 411), Imprägniermittel, Monomere (EP-A 286 454), Emulgatoren und Dispergierhilfsmittel Anwendung und werden außerdem noch zum Deinken bei der Wiederaufarbeitung von Altpapier eingesetzt.

Die kationische Polymerisation von Tetrahydrofuran (THF) mit Hilfe von Katalysatoren wurde von Meerwein et al. (Meerwein et al. (1960) Angew. Chem. 72, 927) beschrieben. Als Katalysatoren werden dabei entweder vorgeformte Katalysatoren verwendet, oder die Katalysatoren werden in situ im Reaktionsgemisch erzeugt. Dies geschieht dadurch, daß im Reaktionsmedium mit Hilfe starker Lewis-Säuren, wie Bortrichlorid, Aluminiumtrichlorid, Zinntetrachlorid, Antimonpentachlorid, Eisen(III)chlorid oder Phosphorpentafluorid, oder mittels starker Brønsted-Säuren, wie Perchlorsäure, Tetrafluoroborsäure, Fluorsulfonsäure, Chlorsulfonsäure, Hexachlorozinn(IV)säure, Iodsäure, Hexachlorantimon(V)säure oder Tetrachloreisen(III)säure, und mit Hilfe von als Promotoren bezeichneten reaktiven Verbindungen, wie Alkylenoxiden, z.B. Ethylenoxid, Propylenoxid, Epichlorhydrin oder Butylenoxid, Oxetanen, Orthoestern, Acetalen, $\alpha$-Halogenethem, Benzylhalogeniden, Triarylmethylhalogeniden, Säurechloriden, $\beta$-Lactonen, Carbonsäureanhydriden, Thionylchlorid, Phosphoroxychlorid oder Sulfonsäurehalogeniden, Oxoniumionen erzeugt werden, die die Polymerisation des THF initiieren. Aus der Vielzahl dieser Katalysatorsysteme haben jedoch nur wenige technische Bedeutung erlangt, da sie teilweise hoch korrosiv sind und/oder bei der Herstellung des PTHF zu verfärbten PTHF-Produkten mit nur beschränkter Verwendbarkeit führen. Viele dieser Katalysatorsysteme wirken darüber hinaus nicht im eigentlichen Sinne katalytisch, sondern müssen, bezogen auf das herzustellende Makromolekül, in stöchiometrischen Mengen eingesetzt werden und werden bei der Polymerisation verbraucht. Beispielsweise müssen bei der Herstellung von PTHF mit Fluorsulfonsäure als Katalysator nach US-A 3 358 042 ungefähr zwei Moleküle Fluorsulfonsäure pro Molekül PTHF als Katalysator eingesetzt werden. Ein besonderer Nachteil bei der Verwendung halogenhaltiger Katalysatoren ist, daß diese zur Bildung halogenierter Nebenprodukte bei der PTHF-Herstellung führen, die vom reinen PTHF nur sehr schwierig abzutrennen sind und dessen Eigenschaften nachteilig beeinflussen.

Bei der Herstellung von PTHF in Gegenwart der oben genannten Promotoren, d. h. Reaktionsbeschleuniger, werden diese als Telogene in das PTHF-Molekül eingebaut, so daß als primäres Produkt der THF-Polymerisation nicht PTHF entsteht, sondern ein PTHF-Derivat, beispielsweise ein PTHF-Diester oder -Sulfonat, aus dem das PTHF in einer weiteren Umsetzung, z.B. durch Verseifung oder Umesterung (vgl. US-A 2 499 725 und DE-A 2 760 272) freigesetzt werden muß. Telogene sind im allgemeinen Verbindungen, die den Kettenabbruch und/oder die Kettenübertragung bei der Polymerisation bewirken. Bei der Verwendung von Alkylenoxiden als Promotoren wirken diese auch als Comonomere und werden in das Polymer eingebaut, mit der Folge, daß THF-Alkylenoxid-Copolymere mit anderen Eigenschaften, insbesondere anderen Anwendungseigenschaften als PTHF, gebildet werden.

Einstufig kann PTHF hergestellt werden, indem man die THF-Polymerisation in Gegenwart von Wasser, 1,4-Butandiol oder niederen PTHF-Oligomeren durchführt. Bei der Verwendung von 2-Butin-1,4-diol als Telogen entstehen Copolymere aus THF und 2-Butin-1,4-diol, die jedoch durch Hydrierung der darin enthaltenen Dreifachbindungen in PTHF überführt werden können.

Gemäß US-A 5 149 862 wird sulfatdotiertes Zirkoniumdioxid als saurer heterogener, im Reaktionsmedium unlöslicher Polymerisationskatalysator verwendet. Zur Beschleunigung der Polymerisation wird dem Reaktionsmedium ein Gemisch aus Essigsäure und Acetanhydrid zugesetzt, da in Abwesenheit dieser Promotoren die Polymerisation nur sehr schleppend verläuft und während eines Zeitraums von 19 Stunden nur ein Umsatz von 6% erzielt wird. Bei diesem Verfahren werden PTHF-Diacetate gebildet, die anschließend durch Verseifung oder Umesterung in PTHF umgewandelt werden müssen.

PTHF-Diester entstehen ebenfalls bei der Polymerisation von THF mit Bleicherdekatalysatoren nach EP-A 0 003 112.

In US-A 4 303 782 werden Zeolithe zur Herstellung von PTHF eingesetzt. Die nach diesem Verfahren erhältlichen THF-Polymeren haben extrem hohe mittlere Molekulargewichte - $M_n$ 250.000 bis 500.000 D - und konnten sich für die obengenannten Anwendungszwecke nicht durchsetzen. Dementsprechend hat auch dieses Verfahren keine industrielle Bedeutung erlangt.

DE 4 433 606 beschreibt beispielsweise die einstufige PTHF-Herstellung durch THF-Polymerisation an heterogenen Trägerkatalysatoren, die eine katalytisch aktive Menge einer sauerstoffhaltigen Wolfram- oder Molybdänverbindung oder Gemische dieser Verbindungen auf einem oxidischen Trägermaterial enthalten und die nach dem Aufbringen der Vorläuferverbindungen der sauerstoffhaltigen Molybdän- und/oder Wolframverbindungen auf den Trägermaterialvorläufer bei Temperaturen von 500 bis 1000 °C kalziniert wurden. Ein Nachteil bei diesen Katalysatoren ist der Einsatz des teuren Zirkondioxides als Trägermaterial.

Aufgabe der vorliegenden Erfindung ist daher, ein Verfahren bereitzustellen, bei dem die Polymerisation cyclischer Ether auf vorteilhafte Weise, insbesondere mit hohen Raum-Zeit-Ausbeuten, und unter Vermeidung der oben geschilderten Nachteile durchgeführt werden kann.

Ein Gegenstand der vorliegenden Erfindung ist daher ein Verfahren zur Polymerisation cyclischer Ether an einem Heterogenkatalysator, wobei der Heterogenkatalysator einen oder mehrere sogenannte Pillared Interlayered Clays (PILCs) enthält, die beispielsweise aus Figueras, F. (1988) Catal. Rev. Sci. Eng., 30, 457 No.3 oder Jones (1988), Catal. Today, 2, 357 bekannt sind.

Unter PILC versteht man im allgemeinen Schichtstrukturen, wobei zwischen den Schichten eine oder mehrere Metallverbindungen in Form von Pfeilern eingelagert sind (siehe z. B. Fig. 2 in Figueras, F. (1988), supra). Im allgemeinen liegt der Schichtabstand zwischen ca. 4-80 Å, vorzugsweise zwischen ca. 8-30 Å, vor allem zwischen ca. 8-25 Å. Der durch die eingelagerten Metallverbindungen "aufgespannte" Raum zwischen den Schichtstrukturen steht als Porenvolumen für die Reaktanden der erfindungsgemäßen Polymerisationsreaktion zur Verfügung. Ein zusätzliches Porenvolumen wird z. B. durch Delaminierung geschaffen, d. h. es werden sogenannte Kartenhausstrukturen erzeugt.

Bevorzugte Metallverbindungen für die Pfeiler sind Metallverbindungen, vorzugsweise Oxide und/oder Sulfide von Elementen der III. und IV. Hauptgruppe des Periodensystems, insbesondere von Aluminium, Gallium, Indium, Thallium, Silizium, Germanium, Zinn oder Blei, vor allem von Aluminium, Gallium oder Silizium, oder von Elementen der Übergangsgruppen, vorzugsweise von Titan, Zirkon, Hafnium, Vanadium, Niob, Tantal, Chrom, Molybdän, Wolfram, Mangan oder Eisen, vor allem von Titan, Zirkon, Vanadium, Tantal, Chrom oder Eisen, die gegebenenfalls als Mischungen untereinander oder als Mischungen mit einem oder mehreren anderen Oxiden und/oder Sulfiden wie z. B. von Magnesium, Bor, Kobalt oder Nickel vorliegen können. Bevorzugt sind oxidische Pfeiler.

Beispiele geeigneter Metalloxide sind $Al_2O_3$, $ZrO_2$, $TiO_2$, $Cr_2O_3$, $Ga_2O_3$, $SiO_2$, $Ta_2O_5$, $Fe_2O_3$ und $V_2O_5$. Beispiele von weiterhin vorliegenden Oxiden sind MgO, $B_2O_3$, $Co_2O_3$ oder NiO. Vor allem ist hierbei eine Mischung aus $Al_2O_3$ und MgO, welche ein Aluminium-Magnesium-Mischoxid ergibt, bevorzugt. Ein Beispiel eines Sulfids ist $Fe_2S_3$.

Auch eignen sich Metallverbindungen mit Perowskit-Struktur wie z. B. $LaCoO_3$, $LaNiO_3$, $LaMnO_3$ und/oder $LaCuO_3$ als Pfeiler (siehe z. B. WO 92/00808).

Der Anteil an eingelagertem Metall ist vorzugsweise ca. 1-50 Gew.-%, insbesondere ca. 2-35 Gew.-% bezogen auf den fertigen PILC und gerechnet als Gew.-% Metall.

Als geeignete Schichtverbindungen zur Herstellung der PILCs eignen sich vorzugsweise Schichtsilikate, insbesondere Tone. Beispiele für Tonmineralien sind z. B. Smektitmineralien, wie z. B. Montmorillonit in reiner Form oder als Bestandteil von Bentonit. Weitere Beispiele für Smektite sind Beidellit, Hectorit, Nontronit, Sauconit oder Saponit (siehe z.B. U.S. 5.409.597, Tabelle 1). Weitere Beispiele von Tonmineralien sind Vermiculit, Mica, Taeniolit oder von Schichtsilikaten sind Kanemit, Ilerit, Magadiit, Makatit oder Kenyait.

Andere Beispiele von geeigneten Schichtverbindungen sind $\alpha$-Zirkoniumphosphat, Tetrasilizium-mica, Brucit, Siliziumsäure TypI oder Rectorit (siehe z. B. Vaughan, D. E. W. (1988) "Developments in Pillared Interlayered Clays" in Perspectives in Molecular Sieve Science (Flank, W. H. & Whyte, Th. E. Jr. eds.) ACS Symposium Series, 368, 308-323, Chapter 19, American Chemical Society; Szostak, R. & Ingram, C. (1995) "Pillared Layered Structures (PLS): From Microporous to Nano-phase Materials" in Catalysis by Microporous Materials, Studies in Surface Science and Catalysis Vol. 94, 13 (Beyer, H. K. et al., eds.) Elsevier Science B. V.).

Der Einfachheit halber sollen im Sinne dieser Erfindung auch andere Pillared Layered Strukturen unter dem Begriff PILC verstanden werden, die nicht aus Tonmineralien hergestellt werden.

Zur Herstellung der PILCs geht man im allgemeinen von käuflichen natürlich vorkommenden oder synthetisch hergestellten Schichtverbindungen aus, die entweder unbehandelt oder vorbehandelt sind (siehe z. B. Mokaya, R. & Jones, W. (1994) J. Chem. Soc. Chem. Commun., 929-930 oder WO 95/14530).

Die Einlagerung einer oder mehrerer Metallverbindungen in vor- oder nicht vorbehandelten Schichtverbindungen erfolgt beispielsweise nach folgendem allgemein bekannten Verfahren (siehe z. B. U.S. 4.238.364 oder WO 95/14530):

Das oder die im allgemeinen negativ geladenen Schichtverbindungen werden zuerst in einem Dispersionsmittel, beispielsweise Wasser, dispergiert, und anschließend mit einer Lösung, die eine oder mehrere im allgemeinen positiv geladene oligomere Hydroxidionen der genannten Metalle enthält, versetzt. Die Metallhydroxidlösung kann beispielsweise durch alkalische Hydrolyse einer entsprechenden Salzlösung nach dem Fachmann bekannten Methoden hergestellt werden. Geeignete Ausgangsverbindungen sind z. B. $AlCl_3$, Aluminium-Chlorhydrat, Aluminiumnitrat oder -acetat, Zirkonylchlorid oder -nitrat, Titanylchlorid oder -nitrat, Titantetrachlorid, Chrom(III)nitrat, Eisen(III)nitrat, Zinn(IV)chlorid, -nitrat oder -acetat. Aus den Lösungen dieser Salze werden die entsprechenden Hydroxide z. B. mittels wäßriger Ammoniaklösung, Natriumhydroxidlösung oder Natriumcarbonatlösung gebildet. Alternativ können die Hydroxide durch Zugabe verdünnter oder schwacher Säuren, wie Essigsäure, zu wasserlöslichen Hydroxokomplexen der entsprechenden Metalle erhalten werden. Ebenso ist es möglich, die Hydroxide durch Hydrolyse von organometallischen Verbindungen, beispielsweise den Alkoholaten der betreffenden Metalle, wie z. B. Zirkoniumtetraethanolat, Zirkoniumtetraisopropylat, Titantetramethanolat, Titantetraisopropylat zu erhalten. Die Bezeichnung "Hydroxide" im Sinne dieser Erfindung stellt eine Sammelbezeichnung für die oligomeren Ionen der genannten Metalle dar, die z. B. auch Oxidhydrate, polymere Hydroxo-Komplexe oder die auch andere Anionen wie Chlorid- oder Alkoholationen enthalten können. Danach werden die Suspensionen beispielsweise ca. 30 Minuten bis 100 Stunden bei z. B. ca. 0-100 °C, vorzugsweise bei ca. 20-95 °C gerührt und anschließend die Schichtverbindung beispielsweise mittels Filtration oder Zentrifugation abgetrennt, danach z. B. mit deionisiertem Wasser gewaschen und in der Regel an der Luft oder unter einer Inertgasatmosphäre, z. B. Stickstoff, bei ca. 100-160 °C getrocknet und bei ca. 150-600 °C, vorzugsweise bei ca. 200-500 °C ca. 2-16 Stunden, kalziniert. Ebenso ist eine Gefriertrocknung möglich. Beispiele positiv geladener Metallhydroxide sind $[Al_{13}O_4(OH)_{24}(H_2O)_{12}]^{7+}$ oder $[Zr_4(OH)_8(H_2O)_{16}]^{8+}$, die nach der Einlagerung und Kalzinierung zu Aluminiumoxid- oder Zirkoniumoxid-Verbindungen ("Pfeiler") führen, d. h. zu Al- bzw. Zr-PILCs.

In einer weiteren Ausführungsform werden die Schichtverbindungen vor oder nach der Einlagerung einer oder mehrerer Metallverbindungen und vor der unten näher beschriebenen Verformung mit einer oder mehreren Säuren behandelt, da die Säurebehandlung das Porenvolumen erhöhen und die Aktivität der PILCs steigern kann. Vorzugsweise wird die Säurebehandlung mit einer anorganischen Säure, wie z. B. Salzsäure, Flußsäure, Schwefelsäure, Phosphorsäure und/oder einer organischen Säure, wie z. B. Oxalsäure, durchgeführt. Die Säurebehandlung wird im allgemeinen mit einer ca. 0,001-20 N, vorzugsweise mit einer ca. 0,1-10 N Säure ca. 1-100 Stunden, vorzugsweise ca. 1-24 Stunden lang in einer wäßrigen Aufschlämmung des Schichtminerals bei ca. 0-150 °C durchgeführt. Nach dem Abtrennen und Auswaschen wird in der Regel bei ca. 150-600 °C, vorzugsweise bei ca. 200-500 °C ca. 2-16 Stunden kalziniert.

In einer alternativen Ausführungsform können die Schichtverbindungen auch gegebenenfalls zusätzlich nach der unten näher beschriebenen Verformung säurebehandelt werden, um noch vorhandene Alkali- oder Erdalkaliionen gegen Wasserstoffionen auszutauschen. Hierbei wird die Schichtverbindung im allgemeinen ca. 1-3 Stunden zwischen ca. 60-80 °C mit einer ca. 3-25 %igen Säure behandelt, ausgewaschen, bei ca. 100-160 °C getrocknet und bei ca. 200-600 °C kalziniert. Vor allem bei der Säurebehandlung von $ZrO_2$-, $TiO_2$- oder $Fe_2O_3$-PILCs mit beispielsweise Schwefelsäure können PILCs mit sulfatierten Metalloxid-"Pfeilern" erhalten werden, die thermisch besonders stabil sind (Farfan-Torres, E. M. & Grange, P. (1991) Catal. Sci. Technol., 1, 103-109.)

Die Behandlung mit Ammonium- und/oder Aminsalzen stellt eine weitere Möglichkeit dar, noch vorhandene Alkali- oder Erdalkaliionen gegen Wasserstoffionen auszutauschen. Hierzu werden die Schichtverbindungen vor oder nach der Einlagerung mit einer oder mehreren Metallverbindungen mit einer ca. 0,1-40 Gew.-%igen, vorzugsweise ca. 5-30 Gew.-%igen Ammoniumsalzlösung, wie z. B. mit einer Ammoniumchlorid- und/oder Ammoniumnitrat-Lösung, und/oder mit einer Salzlösung eines flüchtigen Amins, z. B. Ethylamin, ca. 1-100 Stunden, vorzugsweise ca. 1-24 Stunden lang in einer wäßrigen Aufschlämmung der Schichtverbindung bei ca. 0-100 °C behandelt. Nach dem Abtrennen und Auswaschen wird in der Regel bei ca. 150-600 °C, vorzugsweise bei ca. 200-500 °C ca. 2-16 Stunden kalziniert, um den Ammoniak bzw. das flüchtige Amin wieder zu entfernen.

In einer anderen Ausführungsform wird das Schichtmineral vor oder nach der Einlagerung mit einem oder mehreren Fluoriden, z. B. mit Ammoniumfluorid, fluoriert, wobei entweder die Hydroxylgruppen des Schichtminerals durch Fluorid ersetzt werden (siehe z. B. U.S. 5.308.812) und/oder die eingelagerten Metalloxide fluoriert werden (siehe z. B. U.S. 5.409.597).

In einer weiteren Ausführungsform wurde die Schichtverbindung vor oder nach der Einlagerung eines oder mehrerer Metalloxide und vor oder nach der Verformung zusätzlich mit Metallionen, insbesondere mit Übergangsmetallionen, beispielsweise mit Titan-, Zirkonium-, Niob-, Molybdän-, Wolfram-, Rhenium-, Nickel-, Eisen, Cobaltionen und/oder mit Metallionen der Seltenen Erden wie Cer-, Yttrium- und/oder Lanthanionen dotiert (siehe z. B. U.S. 4.238.364 oder Jiang et al. (1992) in Proc. 9$^{th}$ Int. Zeolite Conf., 2, 631-638). In einer vorteilhaften Ausführungsform wird der bereits verformte PILC in einem Strömungsrohr vorgelegt und eine Lösung an Metallionen in Form beispielsweise eines Halogenids, eines Acetats, eines Oxalats, eines Citrats und/oder eines Nitrats bei ca. 20-100 °C darübergeleitet. Eine weitere Möglichkeit die Katalysatoren zu dotieren, besteht darin, daß man den PILC mit einer Lösung, beispielsweise einer wäßrigen oder alkoholischen Lösung, der oben beschriebenen Übergangsmetallsalzen imprägniert. Anschließend erfolgt eine Trocknung und gegebenenfalls eine zusätzliche Kalzinierung unter den oben bereits näher beschriebenen Bedingungen. Auch kann es vorteilhaft sein, den Metall-dotierten PILC mit Wasserstoff und/oder Wasserdampf nachzubehandeln.

Im allgemeinen kann der PILC für das erfindungsgemäße Verfahren entweder als solches zu Formkörpern, beispielsweise zu Strängen oder Tabletten, oder gegebenenfalls in Anwesenheit eines Bindemittels, vorzugsweise in einem Verhältnis von ca. 98:2 bis ca. 40:60, verformt werden. Als Bindemittel eignen sich verschiedene Aluminiumoxide, vorzugsweise Böhmit (AlOOH), amorphe Aluminiumsilikate, Siliziumdioxid, vorzugsweise hochdisperses Siliziumdioxid, hochdisperses Titandioxid und/oder Tone wie beispielsweise Kaolin. Nach der Verformung werden die Extrudate oder Preßlinge zweckmäßigerweise bei ca. 110-120 °C über Nacht getrocknet und anschließend bei ca. 150-600 °C, vorzugsweise bei ca. 200-500 °C, für ca. 2-16 Stunden kalziniert, wobei die Kalzinierung auch direkt im

Polymerisationsreaktor erfolgen kann. Bei der Durchführung des erfindungsgemäßen Verfahrens in Suspensionsfahrweise eignen sich die Heterogenkatalysatoren in Form von Pulver oder bei einer Festbettanordnung des Heterogenkatalysators als Formkörper, z. B. in Zylinder-, Kugel- oder Splittform. Die Festbettanordnung des Heterogenkatalysators ist insbesondere bei z. B. Schlaufenreaktoren oder beim kontinuierlichen Betrieb des Verfahrens bevorzugt.

Die oben beschriebenen Heterogenkatalysatoren haben im allgemeinen eine BET-Oberfläche von ca. 50-400 $m^2g^{-1}$, vorzugsweise von ca. 60-300 $m^2g^{-1}$, insbesondere von 100-300 $m^2g^{-1}$ und eignen sich überraschenderweise besonders vorteilhaft für die Polymerisation cyclischer Ether. Diese Eigenschaft war deshalb besonders überraschend, da die Katalysatoren bislang überwiegend nur in petrochemischen Verfahren, beispielsweise als Katalysatoren für Alkylierungen, Isomerisierungen oder Cracken von Kohlenwasserstoffen verwendet wurden, also in Verfahren, die mit dem Verfahren gemäß der vorliegenden Erfindung nicht verwandt sind.

Als cyclische Ether eignen sich cyclische Ether der allgemeinen Formel (I)

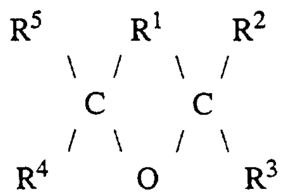

(I),

wobei $R^1$ eine Bindung oder 1 bis 8, vorzugsweise 1 bis 4, vor allem 2 Kohlenstoffatome, die gegebenenfalls mit einem Rest $R^6$ und/oder $R^7$ substituiert sind, bedeutet und $R^2$, $R^3$, $R^4$, $R^5$, $R^6$, und $R^7$ unabhängig voneinander Wasserstoff, oder eine gesättigte oder einfach oder mehrfach ungesättigte Alkylgruppe mit 1 bis 4 Kohlenstoffatomen, oder eine Arylgruppe mit 6 Kohlenstoffatomen ist, wobei gegebenenfalls $R^2$, $R^3$, $R^4$, $R^5$, $R^6$, und/oder $R^7$ über 2 bis 8, vorzugsweise 4 bis 5 Kohlenstoffatome verbunden sein kann, die gegebenenfalls mit einem oder mehreren Resten entsprechend $R^6$ und/oder $R^7$ substituiert sein können. Besonders bevorzugt als cyclische Ether sind z. B. Ethylenoxid, Propylenoxid, Oxetan, Tetrahydrofuran (THF), Tetrahydropyran, 2-Methyltetrahydrofuran, 3-Methyltetrahydrofuran, Styroloxid, vor allem THF, 2-Methyltetrahydrofuran oder 3-Methyltetrahydrofuran, oder Mischungen eines oder mehrerer der genannten cyclischen Ether mit mindestens einer Verbindung als Telogen, ausgewählt aus Wasser, Alkan-, Alken- oder Alkindiolen mit 1-12, vorzugsweise 1-6, insbesondere 1-4 Kohlenstoffatomen, insbesondere Wasser, 1,4-Butandiol und/oder 2-Butin-1,4-diol, Polytetrahydrofuran (PTHF) mit einem Molekulargewicht von ca. 200-700 Dalton, einer Monocarbonsäure mit 1-10, vorzugsweise 1-8 Kohlenstoffatomen, insbesondere Ameisensäure, Essigsäure, Propionsäure, 2-Ethylhexansäure, Acrylsäure und/oder Methacrylsäure, und/oder eines Carbonsäureanhydrids aus Monocarbonsäuren mit 2-20, vorzugsweise mit 2-8 Kohlenstoffatomen, insbesondere Acetanhydrid, Propionsäureanhydrid und/oder Buttersäureanhydrid, vor allem Wasser, 1,4-Butandiol, Ameisensäure, Essigsäure, 2-Butin-1,4-diol und/oder Acetanhydrid. Insbesondere ist eine Mischung aus THF und 1,4-Butandiol, vorzugsweise aus 1 mol THF und ca. 0,1-15 mol 1,4-Butandiol, THF und einem 1,4-Butandiol/Wasser-Gemisch, THF und einem niedermolekularem PTHF, oder aus THF und Essigsäureanhydrid bevorzugt.

Grundsätzlich kann für die katalytische Polymerisation jeder cyclische Ether eingesetzt werden, also z. B. handelsübliche cyclische Ether oder durch Säurebehandlung oder destillativ vorgereinigte cyclische Ether. Ein durch Säurebehandlung vorgereinigter THF ist z. B. in EP-A-0 003 112 beschrieben.

Die Telogene werden vorzugsweise in dem cyclischen Ether selbst, beispielsweise in THF, gelöst. Über die eingesetzte Telogenmenge kann zudem das mittlere Molekulargewicht des Polymerisationsproduktes gesteuert werden. Je mehr Telogen im Reaktionsgemisch enthalten ist, desto niedriger wird das mittlere Molekulargewicht des Polymerisationsproduktes. So können beispielsweise je nach Telogengehalt der Polymerisationsmischung PTHF bzw. die entsprechenden PTHF-Copolymere mit mittleren Molekulargewichten von ca. 250-10000 gezielt hergestellt werden. Vorzugsweise werden mit dem erfindungsgemäßen Verfahren PTHF bzw. die entsprechenden PTHF-Copolymere oder die entsprechenden Derivate mit mittleren Molekulargewichten von ca. 500-10000, vor allem von ca. 650-5000 Dalton hergestellt. Hierzu wird das entsprechende Telogen, bezogen auf die eingesetzte Menge an cyclischen Ether, beispielsweise THF, in Mengen von ca. 0,01-20 mol-%, vorzugsweise von ca. 0,05-10 mol-% und besonders bevorzugt von ca. 0,1-8 mol-% zugesetzt. Die Verwendung z. B. des Telogens 2-Butin-1,4-diol zur katalytischen Herstellung von Polyoxyalkylenglykolen, die C-C-Dreifach- oder C-C-Doppelbindungen enthalten, ist beispielsweise in WO 96/27626 ausführlich beschrieben, oder die Verwendung zur katalytischen Herstellung eines Copolymers aus THF und 2-Butin-1,4-diol ist beispielsweise in DE 195 275 32 ausführlich beschrieben. Im übrigen wird auch auf die DE 44 33 606 oder WO 96/09335 verwiesen, die katalytische Herstellung von PTHF und PTHF-Copolymeren im einzelnen beschreiben.

Die katalytische Polymerisation wird im allgemeinen bei Temperaturen von ca. 0-80°C, vorzugsweise von ca.

25°C bis zur Siedetemperatur des Reaktionsgemisches, z.B. bei THF bis zu ca. 66°C, durchgeführt. Der angewandte Druck ist im allgemeinen für eine erfolgreiche Polymerisation nach dem erfindungsgemäßen Verfahren nicht kritisch, weshalb im allgemeinen bei Atmosphärendruck oder unter dem Eigendruck des Polymerisationssystems polymerisiert wird. Zur Vermeidung der Bildung von Etherperoxiden wird die Polymerisation im allgemeinen vorzugsweise unter einer Inertgasatmosphäre, z.B. Stickstoff, Wasserstoff, Kohlendioxid oder Edelgase wie Argon, vorzugsweise Stickstoff, durchgeführt.

Das erfindungsgemäße Verfahren kann kontinuierlich oder diskontinuierlich durchgeführt werden, wobei aus wirtschaftlichen Gründen im allgemeinen ein kontinuierliches Verfahren bevorzugt ist. Bei der diskontinuierlichen Betriebsweise wird der oder die cyclischen Ether, z.B. THF, das oder die entsprechenden Telogene und der oder die Katalysatoren im allgemeinen in einem Rührkessel oder Schlaufenreaktor bei den oben erwähnten Temperaturen solange umgesetzt, bis der gewünschte Umsatz an cyclischem Ether erreicht ist. Die Reaktionszeit kann in Abhängigkeit von der zugesetzten Katalysatormenge ca. 0,5-40, vorzugsweise ca. 1-30 Stunden betragen. Die Katalysatoren werden im allgemeinen in einer Menge von ca. 1-90 Gew.-%, vorzugsweise von ca. 4-70 Gew.-% und besonders bevorzugt von ca. 8-60 Gew.-%, bezogen auf das Gewicht des oder der cyclischen Ether, beispielsweise THF, eingesetzt.

Zur Aufarbeitung wird der Reaktionsaustrag beispielsweise im Falle der diskontinuierlichen Betriebsweise vom darin befindlichen Katalysator zweckmäßigerweise durch Filtration, Dekantieren oder Zentrifugieren abgetrennt, und im allgemeinen destillativ aufgearbeitet, wobei üblicherweise nicht umgesetztes THF abdestilliert und gegebenenfalls niedermolekulares PTHF vom Polymerisat durch Destillation bei vermindertem Druck abgetrennt werden kann. Durch Rückführung kann das niedermolekulare PTHF als Telogen in die Polymerisation erneut eingebracht werden, wo es in höhermolekulares umgewandelt wird.

Die Produkte der katalytischen Polymerisationsreaktion sind PTHF, PTHF-Derivate und/oder Copolymere aus THF und mindestens einer der oben genannten Verbindungen, beispielsweise ein PTHF-Monoester aus der Reaktion von THF und einer Monocarbonsäure, ein PTHF-Diester aus einer Reaktion von THF und einem Carbonsäureanhydrid oder THF/Butindiol-Copolymere aus der Reaktion von THF und 2-Butin-1,4-diol. Anschließend können die Derivate oder die Copolymere nach allgemein bekannten und oben bereits erwähnten Methoden durch Verseifung oder Hydrierung direkt in PTHF überführt werden.

Es war besonders überraschend, daß nach dem erfindungsgemäßen Verfahren die Polymerisation cyclischer Ether, insbesondere von THF vor allem bei Verwendung von Wasser und/oder 1,4-Butandiol und/oder niedermolekularem PTHF und/oder Essigsäureanhydrid als Telogene, in hohen Raum-Zeit-Ausbeuten in einem Schritt und somit auf besonders vorteilhafte Weise durchgerührt werden konnte. Es ist nach dem erfindungsgemäßen Verfahren auch besonders vorteilhaft, niedermolekulares, offenkettiges PTHF mit einem Molekulargewicht von ca. 200-700 Dalton (niedermolekulares PTHF) als Telogen zu verwenden. Da niedermolekulares PTHF und 1,4-Butandiol zwei Hydroxygruppen besitzen, werden diese Verbindungen nicht nur als Telogen an den Kettenenden der PTHF-Kette, sondern auch in die PTHF-Kette als Monomer eingebaut.

Die folgenden Beispiele sollen die Erfindung näher erläutern, ohne sie zu beschränken:

Beispiele

Die Molekulargewichtsverteilung (Dispersität D) der gemäß den Beispielen hergestellten Polymeren wurde aus dem Verhältnis von Gewichtsmittel des Molekulargewichts ($M_w$) und Zahlenmittel des Molekulargewichts ($M_n$) nach der Gleichung

$$M_w / M_n = D$$

errechnet. $M_w$ und $M_n$ wurden mittels Gelpermeationschromatographie bestimmt, wobei ein standardisiertes Polystyrol zur Eichung verwendet wurde. Aus den erhaltenen Chromatogrammen wurde das Zahlenmittel $M_n$ nach der Gleichung

$$M_n = \Sigma c_i / (\Sigma(c_i / M_i))$$

und das Gewichtsmittel $M_w$ nach der Gleichung

$$M_w = \Sigma c_i \cdot M_i / \Sigma c_i$$

berechnet, in der $c_i$ für die Konzentration der einzelnen Polymerspezies i im erhaltenen Polymergemisch steht und in der $M_i$ das Molekulargewicht der einzelnen Polymerspezies bedeutet.

1. **Katalysatorherstellung**

1.1 Katalysator A: Al-PILC (nach Diano et al. (1994), Microp. Mat., 2, 179)

28,5g $AlCl_3 \cdot 6H_2O$ werden in 584g dest. Wasser gelöst. Hierzu wird eine Lösung aus 10g NaOH in 1,09 Liter dest. Wasser gegeben. Die anfängliche Trübung verschwindet nach 1 h Rühren bei 50 °C. 10g eines Natrium-Montmorilloniten werden in 2 Liter dest. Wasser suspendiert und 0,75 Liter der obigen Lösung hinzugefügt. Mit 1,8g einer 25%igen Ammoniak-Lösung wird ein Ph-Wert von 5,6 eingestellt und 3 h bei 80 °C gerührt. Der so gebildete Al-PILC wird abfiltriert, chloridfrei gewaschen, bei 100 °C für 2 h getrocknet und bei 200 °C für 5 h kalziniert. Nach der Aluminium-Analyse beträgt der Al-Gehalt 16,3%; die BET-Oberfläche beträgt 185 $m^2g^{-1}$, die Mikroporenfläche 87 $m^2g^{-1}$. Im Röntgendiffraktogramm ist ein $d_{001}$-Reflex bei 18,5 Å erkennbar.

1.2 Katalysator B: Zr-PILC (Abwandlung von US 4 176 090, Bsp. 17)

106,3g $ZrOCl_2 \cdot 8H_2O$ werden in 360ml dest. Wasser gelöst und 24 h unter Rückfluß gekocht. Nach Verdünnung auf 1,5 Liter werden bei Raumtemperatur 30g eines säureaktivierten Montmorilloniten hinzugefügt und 1 h gerührt. Der so abgebildete Zr-PILC wird abfiltriert, zweimal mit je 1,5 Liter heißem dest. Wasser gewaschen, bei 110 °C für 2 h getrocknet und bei 250 °C für 3 h kalziniert. Die BET-Oberfläche beträgt 284 $m^2g^{-1}$.

1.3 Katalysator C: Ti-PILC (nach Sychev et al., Proc. Polish-German Zeolite Colloquium, Rozwadowski (Ed.), Nicholas Copernicus University Press: Torún, 1992)

Zu 1 Liter 1 N Salzsäure werden 71,1g $Ti(O^iPr)_4$ langsam zugetropft und 3 h bei Raumtemperatur gerührt. 20g eines natürlichen Montmorilloniten werden in 2 Liter einer 1:1 Mischung aus 1 N HCl und Aceton suspendiert und die obige Lösung hinzugefügt. Nach 3 h Rühren bei Raumtemperatur wird der so gebildete Ti-PILC abfiltriert, mit dest. Wasser gewaschen, bei 100 °C für 2 h getrocknet und bei 300 °C für 3 h kalziniert. Die BET-Oberfläche beträgt 117 $m^2g^{-1}$.

1.4 Katalysator D: Ti-PILC (Abwandlung von Sychev et al., supra)

Zu 1 Liter 1 N Salzsäure werden 71,1g $Ti(O^iPr)_4$ langsam zugetropft und 3 h bei Raumtemperatur gerührt. 20g eines säureaktivierten Montmorilloniten werden in 2 Liter einer 1:1 Mischung aus 1 N Hcl und Aceton suspendiert und die obige Lösung hinzugefügt. Nach 3 h Rühren bei Raumtemperatur wird der so gebildete Ti-PILC abfiltriert, mit dest. Wasser gewaschen, bei 100 °C für 2 h getrocknet und bei 300 °C für 3 h kalziniert. Die BET-Oberfläche beträgt 257 $m^2g^{-1}$. Das Beispiel zeigt, daß auch ein bereits vorbehandeltes Schichtsilikat als Ausgangsstoff verwendet werden kann.

1.5 Katalysator E: Al-PILC (Abwandlung von US 4 176 090, Bsp. 10)

65g 50%ige Chlorhydrol-Lösung (Aluminium-Chlorhydrat, Fa. Reheis, Irland) werden mit 100ml dest. Wasser verdünnt. 60g eines natürlichen Montmorilloniten werden hinzugefügt und die Mischung 1 h bei 65 °C gerührt. Der so gebildete Al-PILC wird abzentrifugiert, mit je 250ml heißem dest. Wasser gewaschen, bei 110 °C 2 h getrocknet und bei 250 °C für 3 h kalziniert. Nach Analyse beträgt der Al-Gehalt 15,7%; die BET-Oberfläche beträgt 87 $m^2g^{-1}$, die Mikroporenfläche 50 $m^2g^{-1}$. Im Röntgendiffraktogramm ist ein $d_{001}$-Reflex bei 18,6 Å erkennbar. 20,6g dieses Al-PILCs werden in 1 Liter 0,5 M $H_2SO_4$ suspendiert und 6 h bei 60 °C gerührt. Der Al-PILC wird abfiltriert, zweimal mit dest. Wasser gewaschen, bei 110 °C 2 h getrocknet und bei 250 °C für 3 h kalziniert. Die BET-Oberfläche beträgt nun 103 $m^2g^{-1}$. Das Beispiel zeigt eine Möglichkeit des nachträglichen Ionenaustausches auf.

1.6 Katalysator F: Al-Mg-PILC (Abwandlung von US 4 248 739, Bsp. 9)

54g 50%ige Chlorhydrol-Lösung (siehe Beispiel 1.5) werden mit dest. Wasser auf 1,6 Liter verdünnt. 41g $MgCl_2 \cdot 6H_2O$ werden in 400ml dest. Wasser gelöst und zu der obigen Lösung hinzugegeben. Nach 3 Tagen Rühren werden 100g eines natürlichen Montmorilloniten hinzugefügt und die Mischung 1 h bei 70 °C gerührt. Der so gebildete Al-Mg-PILC wird abfiltriert, zweimal mit je 1 Liter heißem dest. Wasser gewaschen, bei 110 °C über Nacht getrocknet und bei 200 °C für 5 h kalziniert. Nach Analyse beträgt der Al-Gehalt 15,8%, Mg 1,2%; die BET-Oberfläche beträgt 105 $m^2g^{-1}$, die Mikroporenfläche 52 $m^2g^{-1}$. Im Röntgendiffraktogramm ist ein $d_{001}$-Reflex bei 18,9 Å erkennbar. 51,9g dieses Al-Mg-PILCs werden in 1 Liter 5 M $H_2SO_4$ suspendiert und 6 h bei 60 °C gerührt. Der Al-Mg-PILC wird abfiltriert, mit dest. Wasser gewaschen, bei 110 °C über Nacht getrocknet und bei 200 °C für 5 h kalziniert. Die BET-Oberfläche

beträgt nun 193 $m^2g^{-1}$. Das Beispiel zeigt den Einsatz gemischter Metalloxid-Pfeiler auf.

1.7 Katalysator G: Al-Mg-PILC (Abwandlung von US 4 248 739, Bsp. 9)

54g 50%ige Chlorhydrol-Lösung (Aluminium-Chlorhydrat, Fa. Reheis) werden mit dest. Wasser auf 1,6 Liter verdünnt. 41g $MgCl_2$ $6H_2O$ werden in 400ml dest. Wasser gelöst und zu der obigen Lösung hinzugegeben. Nach 3 Tagen Rühren werden 100g eines natürlichen Montmorilloniten hinzugefügt und die Mischung 1 h bei 70 °C gerührt. Der so gebildete Al-Mg-PILC wird abfiltriert, zweimal mit je 11 heißem dest. Wasser gewaschen, bei 110 °C über Nacht getrocknet und bei 200 °C für 5 h kalziniert. 54,8g dieses Al-Mg-PILCs werden in 1 Liter 5 M $H_2SO_4$ suspendiert und 12 h bei 60 °C gerührt. Der Al-Mg-PILC wird abfiltriert, mit dest. Wasser gewaschen, bei 110 °C über Nacht getrocknet und bei 200 °C für 5 h kalziniert. Die BET-Oberfläche beträgt 237 $m^2g^{-1}$.

1.8 Katalysator H: Cr-PILC (Abwandlung von Pinnavaia et al.(1985), J. Am. Chem. Soc. 107, 4783)

Zu 6 Liter einer 0,1 M $Cr(NO_3)_3$-Lösung werden langsam 343,4g $Na_2CO_3 \cdot 10H_2O$ hinzugegeben und über Nacht bei 95 °C gerührt. 40g eines säureaktivierten Montmorilloniten werden in 4 Liter dest. Wasser suspendiert und in die obige Lösung gegeben. Nach 2 h Rühren bei 95 °C wird der so gebildete Cr-PILC abfiltriert, mit dest. Wasser gewaschen, bei 100 °C für 2 h getrocknet und bei 300 °C für 2 h kalziniert. Nach Analyse beträgt der Cr-Gehalt 31%; die BET-Oberflläche beträgt 74 $m^2g^{-1}$. 28,3g dieses Cr-PILCs werden in 1 Liter 5 M $H_2SO_4$ suspendiert und 6 h bei 60 °C gerührt. Der Cr-PILC wird abfiltriert, mit dest. Wasser gewaschen, bei 110 °C über Nacht getrocknet und bei 200 °C für 5 h kalziniert. Die BET-Oberfläche beträgt nun 211 $m^2g^{-1}$.

1.9 Katalysator I: Al-PILC (Abwandlung von Diano et al. (1994), Microp. Mat. 2, 179)

57g $AlCl_3 \cdot 6H_2O$ werden in 1,2 Liter dest. Wasser gelöst. Hierzu wird eine Lösung aus 20g NaOH in 2,2 Liter dest. $H_2O$ gegeben und noch 1 h bei 50 °C gerührt. 40g eines Natrium-Montmorilloniten werden in 8 Liter destilliertem Wasser suspendiert und 3 Liter der obigen Lösung hinzugefügt. Mit 9g einer 25%igen Ammoniak-Lösung wird ein Ph-Wert von 5,0 eingestellt und 3 h bei 80 °C gerührt. Der so gebildete Al-PILC wird abfiltriert, chloridfrei gewaschen, bei 110 °C über Nacht getrocknet und bei 200 °C für 5 h kalziniert. 43g des PILCs werden in 1 Liter 5 M $H_2SO_4$ suspendiert und 6 h bei 60 °C gerührt. Der Al-PILC wird abfiltriert, mit dest. Wasser gewaschen, bei 110 °C über Nacht getrocknet und bei 200 °C für 5 h kalziniert. Nach der Aluminium-Analyse beträgt der Al-Gehalt 10,1%; die BET-Oberfläche beträgt 122 $m^2g^{-1}$.

1.10 Katalysator J: Al-Mg-PILC (Abwandlung von US 4 248 739, Bsp. 9)

270g 50%ige Chlorhydrol-Lösung (siehe Beispiel 1.5) werden mit dest. Wasser auf 8 Liter verdünnt. 205g $MgCl_2 \cdot 6H_2O$ werden in 2 Liter dest. Wasser gelöst und zu der obigen Lösung hinzugegeben. Nach 3 Tagen Rühren werden 500g eines natürlichen Montmorilloniten hinzugefügt und die Mischung 1 h bei 70 °C gerührt. Der so gebildete Al-Mg-PILC wird abfiltriert, mit dest. Wasser gewaschen, bei 110 °C über Nacht getrocknet und bei 200 °C für 5 h kalziniert. Der so getrocknete Al-Mg-PILC wird in 5 Liter 5 M $H_2SO_4$ suspendiert und 6 h bei 60 °C gerührt. Der Al-Mg-PILC wird abfiltriert, mit 5 Liter dest. Wasser gewaschen, bei 110 °C für 16 h getrocknet und bei 200 °C für 5 h kalziniert. Der so getrocknete säureausgetauschte Al-Mg-PILC wird mit 95g Böhmit und 9,5g Ameisensäure versetzt. Im Kneter wird die Mischung kompaktiert und unter vorsichtigem Wasserzusatz (295 ml) innerhalb von 2 h verknetet. In einer Strangpresse werden mit einem Preßdruck von 85 bar 2mm Stränge erzeugt, 16 h bei 110 °C getrocknet und 5 h bei 200 °C kalziniert. Die BET-Oberfläche beträgt 236 $m^2g^{-1}$.

1.11 Katalysator K: Ti-PILC (Abwandlung von Sychev et al., supra)

Zu 1 Liter 1 N Salzsäure werden 71,1g $Ti(O^iPr)_4$ langsam zugetropft und 3 h bei Raumtemperatur gerührt. 40g eines säureaktivierten Montmorilloniten werden in 2 Liter einer 1:1 Mischung aus 1 N Hcl und Aceton suspendiert und die obige Lösung hinzugefügt. Nach 3 h Rühren bei Raumtemperatur wird der so gebildete Ti-PILC abfiltriert, mit dest. Wasser gewaschen und bei 200 °C für 3 h kalziniert. Die BET-Oberfläche beträgt 148 $m^2g^{-1}$.

2. **Diskontinuierliche THF-Polymerisation**

2.1 Telogen: 1,4-Butandiol

Die diskontinuierlichen Polymerisationsversuche wurden in 100ml Glaskolben mit Rückflußkühler unter einer

Stickstoff-Atmosphäre durchgeführt. 5g Katalysatorformkörper, die vor ihrer Verwendung zur Entfernung von adsorbiertem Wasser 18 h lang bei 180 °C/0,3 mbar getrocknet worden waren, wurden in 10g Butandiol-haltigem THF (Wassergehalt 30 ppm) 24 h lang auf 50 °C erhitzt. Anschließend wurde dem Reaktionsgemisch wasserhaltiges THF (5 Gew.-% Wasser) zugegeben und der Katalysator durch Filtration und/oder Zentrifugation abgetrennt. Nach dreimaligem Waschen des Katalysator mit je 40g THF wurden die Filtrate vereinigt und bei 70 °C/20 mbar am Rotationsverdampfer und anschließend noch 30 min bei 160 °C/0,3 mbar im Kugelrohrofen eingeengt. Als Destillationsrückstand anfallendes PTHF wurde ausgewogen und analysiert. Die nachstehende Tabelle 1 faßt die an den Katalysatoren A bis K erhaltenen Versuchsergebnisse zusammen.

Tabelle 1

| Beispiel | Katalysator | Butandiol [ppm] | Ausbeute [%] | $M_n$ (GPC) | D (GPC) |
|---|---|---|---|---|---|
| 1 | A | 2000 | 25 | 5736 | 11,3 |
| 2 | B | 2000 | 31 | 9054 | 8,4 |
| 3 | C | 2000 | 26 | 11000 | |
| 4 | D | 2000 | 37 | 16000 | |
| 5 | E | 2000 | 31 | 9995 | 6,6 |
| 6 | F | 2000 | 27 | 5320 | 4,0 |
| 7 | G | 2000 | 37 | 11729 | 3,5 |
| 8 | H | 2000 | 24 | 8862 | 8,3 |
| 9 | I | 2000 | 26 | 4810 | 3,9 |
| 10 | J | 2000 | 39 | 6734 | 5,2 |
| 11 | K | 2000 | 33 | 1510 | 1,4 |
| 12 | F | 4000 | 22 | 4693 | 7,4 |
| 13 | F | 8000 | 13 | 2578 | 4,8 |
| $M_n$ = mittleres PTHF-Molgewicht (Zahlenmittel); Dispersität D = $M_w/M_n$ | | | | | |

2.2 Telogen: Essigsäureanhydrid

Die diskontinuierlichen Polymerisationsversuche mit Essigsäureanhydrid (ESA) wurden in Abweichung zur oben beschriebenen THF-Polymerisation mit 1,4-Butandiol als Telogen bei 60 °C und einer Reaktionszeit von nur 5 h durchgeführt. Anstelle von 0,2 Gew.-% Butandiol wurden 1,0 Gew.-% ESA eingesetzt. Die Versuchsführung, eingesetzte Mengenverhältnisse sowie die Aufarbeitung wurde analog der Butandiol-Fahrweise durchgeführt. Bei Einsatz des PILC-Katalysators J wurde ein THF-Umsatz von 18% erzielt. Die mittlere Molmasse betrug nach GPC 4829 Dalton, die Dispersität wurde zu 3,5 bestimmt.

3. **Kontinuierliche THF-Polymerisation**

3.1 Telogen: 1,4-Butandiol

Ein 250 ml Festbettreaktor wurde unter Argon mit 250ml (177 g) des 20 h bei 180 °C/0,3 mbar getrockneten Aluminium-Magnesium-PILC-Katalysators J befüllt. Beim Einfüllen wurde der Katalysator mit THF (< 0,01 Gew.-% Wasser) überdeckt. Um Katalysatorstaub zu entfernen, wurde der Katalysator zweimal mit je 300ml THF, das 0,4 Gew.-% 1,4-Butandiol (BDO) enthielt, gewaschen. Zum Umpumpen der Reaktionsmischung war eine Umlaufpumpe vorhanden. Nach vollständigem Befüllen von Reaktor, Pumpe und Rohrleitungen mit THF, dem 0,4 Gew.-% BDO zugesetzt worden war, wurde die Umlaufpumpe in Betrieb genommen, die Reaktionstemperatur auf 50 °C geregelt und kontinuierlich 20g THF mit einem BDO-Gehalt von 4000 ppm entsprechend einer Katalysator-Belastung von $0.08 kg_{THF} 1_{Kat.}^{-1} h^{-1}$ in den Kreislauf dosiert. Das Umlauf/Zulaufverhältnis betrug etwa 20. Durch Absenkung des BDO-Gehalts auf 0,2 Gew.-% konnte das mittlere Molgewicht $M_n$ des erhaltenen PTHF laut GPC und $^1H$-NMR bei einem Umsatz von 1,9% entsprechend einer Raum-Zeit-Ausbeute von $1.5 g_{PTHF} 1_{Kat.}^{-1} h^{-1}$ auf ca. 2000 Dalton einreguliert werden. Die THF-Umsätze wurden nach destillativer Rest-THF-Abtrennung (60 °C, 60mbar) und Kugelrohrdestillation (150 °C, 0,3mbar) bestimmt.

## Patentansprüche

1. Verfahren zur Polymerisation cyclischer Ether der allgemeinen Formel (I)

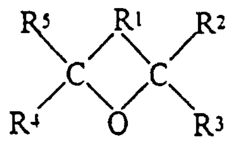

(I)

wobei $R^1$ 1 bis 8 Kohlenstoffatome, die gegebenenfalls mit einem Rest $R^6$ und/oder $R^7$ substituiert sind, bedeutet, und $R^2$, $R^3$, $R^4$, $R^5$, $R^6$ und $R^7$ unabhängig voneinander Wasserstoff oder eine gesättigte oder einfach oder mehrfach ungesättigte Alkylgruppe mit 1 bis 4 Kohlenstoffatomen, oder eine Arylgruppe mit 6 Kohlenstoffatomen ist, wobei gegebenenfalls $R^1$, $R^2$, $R^3$, $R^4$, $R^5$, $R^6$ und/oder $R^7$ über 2 bis 8 Kohlenstoffatome verbunden sein können, die gegebenenfalls mit einem oder mehreren Resten entsprechend $R^6$ und/oder $R^7$ substituiert sein können, an einem Heterogenkatalysator, **dadurch gekennzeichnet, daß** der Heterogenkatalysator einen oder mehrere Pillared Interlayered Clays (PILCs) in Form von Schichtstrukturen, wobei zwischen den Schichten eine oder mehrere Metallverbindungen in Form von Pfeilern eingelagert sind, enthält.

2. Verfahren nach Anspruch 1, **dadurch gekennzeichnet, daß** der oder die PILCS aus Schichtverbindungen bestehen, zwischen denen eine oder mehrere Metallverbindungen von Elementen der III. und IV. Hauptgruppe des Periodensystems oder von Elementen der Übergangsgruppen, Mischungen daraus oder Mischungen einer oder mehrerer der Metallverbindungen mit anderen Metalloxiden und/oder Metallsulfiden, eingelagert sind.

3. Verfahren nach Anspruch 2, **dadurch gekennzeichnet, daß** die Metallverbindung oder die Metallverbindungen ein Oxid und/oder Sulfid des oder der genannten Metalle sind.

4. Verfahren nach einem der Ansprüche 1-3, **dadurch gekennzeichnet, daß** die Schichtverbindung ausgewählt ist aus Tonmineral, $\alpha$-Zirkoniumphosphat, Tetrasilizium-mica, Brucit, Siliziumsäure TypI und/oder Rectorit.

5. Verfahren nach einem der Ansprüche 1-4, **dadurch gekennzeichnet, daß** die Schichtverbindung vor oder nach der Einlagerung eines oder mehrerer der genannten Metallverbindungen mit einer oder mehreren Säuren oder mit einer oder mehreren Ammonium- und/oder Aminsalzlösungen behandelt wurde.

6. Verfahren nach einem der Ansprüche 1-5, **dadurch gekennzeichnet, daß** die Schichtverbindung vor oder nach der Einlagerung einer oder mehrerer Metallverbindungen zusätzlich mit einem oder mehreren Übergangsmetallionen oder Ionen der Seltenen Erden, ausgewählt aus Titan-, Zirkonium-, Niob-, Molybdän-, Wolfram-, Eisen-, Cobalt-, Rhenium-, Nickel-, Yttrium-, Lanthan- und/oder Cerionen, dotiert wurde.

7. Verfahren nach einem der Ansprüche 1-6, **dadurch gekennzeichnet, daß** ein oder mehrere cyclische Ether in einer Mischung mit mindestens einer Verbindung ausgewählt aus Wasser, Alkan-, Alken- oder Alkindiolen mit 1-12 Kohlenstoffatomen, Polytetrahydrofuran (PTHF) mit einem Molekulargewicht von ca. 200-700 Dalton, einer Monocarbonsäure mit 1-10 Kohlenstoffatomen, und/oder einem Carbonsäureanhydrid aus Monocarbonsäuren mit 2-20 Kohlenstoffatomen, eingesetzt werden.

8. Verfahren nach Anspruch 7, **dadurch gekennzeichnet, daß** ein oder mehrere cyclische Ether in einer Mischung mit mindestens einer Verbindung, ausgewählt aus Wasser, 1,4-Butandiol und/oder 2-Butin-1,4-diol, Polytetrahydrofuran mit einem Molekulargewicht von ca. 200 bis 700 Dalton, Ameisensäure, Essigsäure, Propionsäure, 2-Ethylhexansäure, Acrylsäure, Methacrylsäure, Acetanhydrid, Propionsäureanhydrid und/oder Buttersäureanhydrid, eingesetzt werden.

9. Verfahren nach einem der Ansprüche 1-8, **dadurch gekennzeichnet, daß** der Heterogenkatalysator in einer Menge von ca. 1-90 Gew.-%, bezogen auf das Gewicht des oder der cyclischen Ether, eingesetzt wird.

10. Verfahren nach einem der Ansprüche 1-9, **dadurch gekennzeichnet, daß** als Heterogenkatalysator ein Pillared Clay eingesetzt wird, der mit einem Bindemittel zu einem Formkörper verformt und der anschließend bei ca.

150-600 °C kalziniert wurde.

## Claims

1. A process for polymerizing cyclic ethers of the formula (I)

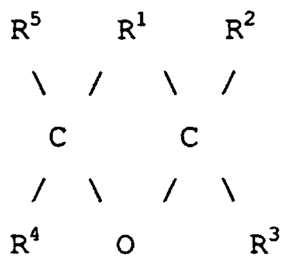

(I)

where $R^1$ is 1-8 carbon atoms which may be substituted with a radical $R^6$ and/or $R^7$, and $R^2$, $R^3$, $R^4$, $R^5$, $R^6$ and $R^7$ are each independently of one another hydrogen, a saturated or mono- or polyunsaturated alkyl group having 1-4 carbon atoms or an aryl group having 6 carbon atoms, where $R^1$, R2, $R^3$, $R^4$, $R^5$, $R^6$ and/or $R^7$ may be linked via 2-8 carbon atoms which may be substituted with one or more radicals like $R^6$ and/or $R^7$, over a heterogeneous catalyst, which comprises using a heterogeneous catalyst comprising one or more pillared inter-layered clays (PILCs) in the form of layer structures intercalated with one or more metal compounds in the form of pillars.

2. A process as claimed in claim 1, wherein the PILC(s) consist(s) of layer compounds intercalated with one or more metal compounds of elements of main groups III and IV of the Periodic Table of the Elements, or of elements of the transition groups, mixtures thereof or mixtures of one or more of the metal compounds with other metal oxides and/or metal sulfides.

3. A process as claimed in claim 2, wherein the metal compound(s) is/are an oxide and/or a sulfide of said metal(s).

4. A process as claimed in any of claims 1-3, wherein the layer compound is selected from the group consisting of clay mineral, α-zirconium phosphate, tetrasilicon mica, brucite, silicic acid type I and/or rectorite.

5. A process as claimed in any of claims 1-4, wherein the layer compound was treated with one or more acids or one or more ammonium and/or amine salt solutions prior to or after intercalation of one or more of said metal compounds.

6. A process as claimed in any of claims 1-5, wherein the layer compound was doped with one or more transition metal ions or rare earth ions, selected from titanium, zirconium, niobium, molybdenum, tungsten, iron, cobalt, rhenium, nickel, yttrium, lanthanum and/or cerium ions, prior to or after intercalation of one or more metal compounds.

7. A process as claimed in any of claims 1-6, wherein one or more cyclic ethers are used in a mixture with at least one compound selected from the group consisting of water, alkanediols, alkenediols or alkynediols having 1-12 carbon atoms, polytetrahydrofuran (PTHF) having a molecular weight of about 200-700 dalton, a monocarboxylic acid having 1-10 carbon atoms, and/or methacrylic acid, and/or a carboxylic anhydride of monocarboxylic acids having 2-20 carbon atoms.

8. A process as claimed in claim 7, wherein one or more cyclic ethers are used in a mixture with at least one compound selected from the group consisting of water, 1,4-butanediol and/or 2-butyne-1,4-diol, polytetrahydrofuran having a molecular weight of about 200 to 700 dalton, formic acid, acetic acid, propionic acid, 2-ethylhexanoic acid, acrylic acid, methacrylic acid, acetic anhydride, propionic anhydride and/or butyric anhydride.

9. A process as claimed in any of claims 1-8, wherein the heterogeneous catalyst is used in an amount of about 1-90 % by weight, based on the weight of the cyclic ether(s).

10. A process as claimed in any of claims 1-9, wherein the heterogeneous catalyst used is a pillared clay which has been shaped, with a binder, to give a shaped article and then calcined at about 150-600°C.

## Revendications

1. Procédé pour polymériser des éthers cycliques de formule générale (I)

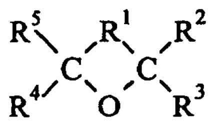

(I)

dans laquelle $R^1$ a de 1 à 8 atomes de carbone, qui sont éventuellement substitués par un radical $R^6$ et/ou $R^7$, et $R^2$, $R^3$, $R^4$, $R^5$, $R^6$ et $R^7$ représentent chacun indépendamment des autres un atome d'hydrogène ou un groupe alkyle saturé, ou une ou plusieurs fois insaturé, ayant de 1 à 4 atomes de carbone, ou un groupe aryle ayant 6 atomes de carbone, auquel cas éventuellement $R^1$, $R^2$, $R^3$, $R^4$, $R^5$, $R^6$ et/ou $R^7$ peuvent être liés par l'intermédiaire de 2 à 8 atomes de carbone, qui peuvent éventuellement être substitués par un ou plusieurs radicaux correspondants à $R^6$ et/ou $R^7$, la polymérisation se faisant sur un catalyseur hétérogène, **caractérisé en ce que** le catalyseur hétérogène contient une ou plusieurs argiles lamellaires à piliers (en anglais : Pillared Interlayered Clays, PILC), sous forme de structures lamellaires, un ou plusieurs composés métalliques, sous forme de piliers, étant insérés entre les feuillets.

2. Procédé selon la revendication 1, **caractérisé en ce que** les PILC sont constitués de composés lamellaires, entre lesquels sont insérés un ou plusieurs composés métalliques des éléments du IIIème et du IVème Groupes Principaux du Tableau Périodique, ou d'éléments des groupes de transition, de mélanges de ceux-ci ou de mélanges d'un ou plusieurs des composés métalliques avec d'autres oxydes et/ou sulfures métalliques.

3. Procédé selon la revendication 2, **caractérisé en ce que** le composé métallique ou les composés métalliques représentent un oxyde et/ou un sulfure du ou des métaux mentionnés.

4. Procédé selon l'une des revendications 1 à 3, **caractérisé en ce que** le composé lamellaire est choisi parmi les produits minéraux argileux, le phosphate d'α-zirconium, le mica tétrasilicique, la brucite, l'acide silicique de type I et/ou la rectorite.

5. Procédé selon l'une des revendications 1 à 4, **caractérisé en ce que** le composé lamellaire a été, avant ou après insertion d'un ou plusieurs des composés métalliques mentionnés, traité avec un ou plusieurs acides ou avec une ou plusieurs solutions d'un sel d'ammonium et/ou d'amine.

6. Procédé selon l'une des revendications 1 à 5, **caractérisé en ce que** le composé lamellaire a été, avant ou après insertion d'un ou plusieurs composés métalliques, dopé en outre par un ou plusieurs ions de métaux de transition ou ions des terres rares, choisis parmi les ions titane, zirconium, niobium, molybdène, tungstène, fer, cobalt, rhénium, nickel, yttrium, lanthane et/ou cérium.

7. Procédé selon l'une des revendications 1 à 6, **caractérisé en ce qu'**on utilise un ou plusieurs éthers cycliques dans un mélange avec au moins un composé choisi parmi l'eau, les alcanediols, les alcènediols ou les alcynediols ayant de 1 à 12 atomes de carbone, le polytétrahydrofuranne (PTHF) ayant une masse moléculaire d'environ 200 à 700 daltons, un acide monocarboxylique ayant de 1 à 10 atomes de carbone et/ou un anhydride d'acides monocarboxyliques ayant de 2 à 20 atomes de carbone.

8. Procédé selon la revendication 7, **caractérisé en ce qu'**on utilise un ou plusieurs éthers cycliques dans un mélange avec au moins un composé choisi parmi l'eau, le 1,4-butanediol et/ou le 2-butyne-1,4-diol, le polytétrahydrofuranne ayant une masse moléculaire d'environ 200 à 700 daltons, l'acide formique, l'acide acétique, l'acide propionique, l'acide 2-éthylhexanoïque, l'acide acrylique, l'acide méthacrylique, l'anhydride acétique, l'anhydride propionique et/ou l'anhydride butyrique.

9. Procédé selon l'une des revendications 1 à 8, **caractérisé en ce que** le catalyseur hétérogène est utilisé en une quantité d'environ 1 à 90 % en poids par rapport au poids du ou des éthers cycliques.

10. Procédé selon l'une des revendications 1 à 9, **caractérisé en ce qu'**on utilise en tant que catalyseur hétérogène une argile à piliers qui a été façonnée à l'aide d'un liant pour donner un objet moulé, et qui ensuite a été calciné à une température d'environ 150 à 600°C.